Europäisches Patentamt

European Patent Office

Office européen des brevets

(19)

(11) **EP 0 739 108 B1**

(12) **EUROPÄISCHE PATENTSCHRIFT**

(45) Veröffentlichungstag und Bekanntmachung des Hinweises auf die Patenterteilung:
**03.11.1999 Patentblatt 1999/44**

(51) Int Cl.6: **H04L 9/32**, H04L 9/30

(21) Anmeldenummer: **96100890.1**

(22) Anmeldetag: **23.01.1996**

(54) **Verfahren zum Signieren einer Nachricht unter Verwendung eines Kryptosystems mit öffentlichem Schlüssel**

Method for signing a message using public-key cryptography

Procédé pour signer un message utilisant une cryptographie à clé publique

(84) Benannte Vertragsstaaten:
**AT BE DE DK ES FR GB GR IT LU NL PT SE**

(30) Priorität: **12.04.1995 DE 19513896**

(43) Veröffentlichungstag der Anmeldung:
**23.10.1996 Patentblatt 1996/43**

(73) Patentinhaber: **Deutsche Telekom AG**
**53113 Bonn (DE)**

(72) Erfinder: **Schwenk, Jörg, Dr.rer.nat.**
**D-64846 Gross-Zimmern (DE)**

(74) Vertreter: **Gornott, Dietmar, Dipl.-Ing.**
**Zilleweg 29**
**64291 Darmstadt (DE)**

(56) Entgegenhaltungen:
- **TECHNICAL REPORT MIT/LCS/TR-212 MASSACHUSETTS INSTITUTE OF TECHNOLOGY LABORATORY FOR COMPUTER SCIENCE, Januar 1979 CAMBRIDGE (US), Seiten 1-16, M.O.RABIN 'DIGITALIZED SIGNATURES AND PUBLIC-KEY FUNCTIONS AS INTRACTABLE AS FACTORIZATION'**
- **22ND ANNUAL SYMPOSIUM ON FOUNDATIONS OF COMPUTER SCIENCE, NASHVILLE, TN, USA, 28-30 OCT. 1981, 1981, NEW YORK, NY, USA, IEEE, USA, Seiten 394-398, XP 000576764 BEN-OR M 'Probabilistic algorithms in finite fields'**

**Beschreibung**

Die Erfindung betrifft ein Verfahren zum Signieren einer Nachricht, wobei zum Signieren ein geheimer Schlüssel angewendet wird und eine Prüfung der Signatur mit Hilfe eines öffentlichen Schlüssels möglich ist, wobei der öffentliche Schlüssel eine Zahl n ist, die das Produkt zweier großer Primzahlen p und q ist, wobei der geheime Schlüssel aus mindestens einer der beiden Primzahlen besteht, wobei ein Polynom P(x) unter Berücksichtigung der Nachricht und einer Zufallszahl gebildet wird, wobei aus dem Polynom weitere Polynome P(x) mod p und P(x) mod q abgeleitet werden, deren Nullstellen im jeweiligen endlichen Körper GF(p) bzw. GF(q) bestimmt werden, wobei die Nullstellen zu einer oder mehreren Lösungen z der Gleichung [P(x) mod n] = 0 zusammengesetzt werden und wobei die Zufallszahl und mindestens eine Lösung z als Signatur der Nachricht hinzugefügt werden.

Das Grundprinzip dieser Verfahren ist beispielsweise bekannt aus IEEE Transactions on Information Theory, Vol. IT-22, November 1976, Seiten 644 bis 654. Eine konkrete Realisierung dieses Prinzips - auch RSA-Verfahren genannt - wurde erstmals beschrieben in den Communications of the ACM, Vol. 27, No. 27, Februar 1978, Seiten 120 bis 126. Mit dem geheimen Schlüssel wird zu dem jeweils zu übertragenen Datensatz eine Signatur erzeugt, worauf mit dem öffentlichen Schlüssel von jedem Empfänger die Echtheit und Herkunft dieser Signatur überprüft werden können.

Das bekannte RSA-Verfahren beruht auf dem mathematischen Problem, solche Zahlen zu faktorisieren, d. h. die Faktoren zu ermitteln.

Durch Rabin M. O.: "Digitalized Signatures and Public-Key Functions as Intractable as Factorization", Massachusetts Institute of Technology Laboratory for Computer Science, Cambridge, Massachusetts 02139, January 1979, ist ein Verfahren nach der Gattung des Hauptanspruchs bekanntgeworden. Für die Signatur längerer Nachrichten ist bei dem bekannten Verfahren eine Kompression der Nachricht mit Hash-Funktionen erforderlich, damit der zur Verfügung stehende Zahlenraum für die Bildung des Koeffizienten genügt. Die Kompression mittels Hash-Funktionen hat sich jedoch als unzuverlässig bezüglich Fälschungsangriffen herausgestellt.

Der Erfindung liegt die Aufgabe zugrunde, ein Verfahren zum Signieren auch von längeren Nachrichten ohne deren Kompression anzugeben, wobei die praktische Durchführung der Signatur und der Überprüfung in möglichst einfacher Weise und mit hoher Geschwindigkeit möglich sein soll.

Diese Aufgabe wird erfindungsgemäß dadurch gelöst, daß das Polynom die Form $P(x) = x^k + a_{k-1}x^{k-1} + ... + a_1x + a_0$ aufweist mit $k \geq 2$ und daß die Koeffizienten $a_{k-1}...a_0$ aus der Nachricht unter Berücksichtigung der Zufallszahl gebildet werden.

Vorzugsweise ist bei dem erfindungsgemäßen Verfahren vorgesehen, daß mehrere ausgewählte Lösungen z der Nachricht hinzugefügt werden.

Für den Fall, daß sich für eines oder beide der weiteren Polynome keine Nullstellen im jeweiligen endlichen Körper finden lassen, ist gemäß einer Weiterbildung vorgesehen, daß die Bildung des Polynoms, die Ableitung der weiteren Polynome und die Bestimmung der Nullstellen der weiteren Polynome erforderlichenfalls mit einer anderen Zufallszahl wiederholt werden, bis beide jeweils bestimmten Nullstellen im jeweiligen endlichen Körper liegen.

Eine besonders hohe Sicherheit ist insbesondere dann gegeben, wenn jedes der beiden weiteren Polynome mindestens zwei verschiedene Nullstellen im jeweiligen endlichen Körper besitzt. Dazu ist bei einer anderen Weiterbildung des erfindungsgemäßen Verfahrens vorgesehen, daß die Bildung des Polynoms, die Ableitung der weiteren Polynome und die Bestimmung der Nullstellen der weiteren Polynome erforderlichenfalls mit einer anderen Zufallszahl wiederholt werden, bis beide weiteren Polynome mindestens eine vorgegebene Anzahl von Nullstellen im jeweiligen endlichen Körper besitzen.

Die Nullstellen von P(x) mod p seien dann mit $d_1$, $d_2$ und die von P(x) mod q mit $e_1$, $e_2$ bezeichnet. Dann besteht die Signatur der Nachricht aus der verwendeten Zufallszahl und den beiden Zahlen $\alpha \cdot p \cdot e_1 + \beta \cdot q \cdot d_1$ und $\alpha \cdot p \cdot e_2 + \beta \cdot q \cdot d_2$, wobei $\alpha \cdot p + \beta \cdot q = 1$ die Vielfachsummendarstellung der Zahl 1 ist, die mit Hilfe des erweiterten Euklidischen Algorithmus berechnet werden kann.

Eine vorteilhafte Bildung der Koeffizienten, die insbesondere bei Wiederholung der Berechnungen mit verschiedenen Zufallszahlen Vorteile bringt, ist bei einer anderen Weiterbildung der Erfindung dadurch gegeben, daß der Koeffizient $a_0$ von der Zufallszahl gebildet wird und daß die weiteren Koeffizienten des Polynoms durch einen vorgegebenen Algorithmus aus der Nachricht abgeleitet werden. Die weiteren Koeffizienten können beispielsweise dann dadurch gebildet werden, daß der vorgegebene Algorithmus eine Einteilung der Nachricht in Blöcke und die Zuordnung der Blöcke zu den einzelnen Koeffizienten beinhaltet.

Eine vorteilhafte Ausbildung des erfindungsgemäßen Verfahrens besteht darin, daß aus den Nullstellen der weiteren Polynome durch Anwendung des erweiterten Euklidischen Algorithmus und des chinesischen Restsatzes die Lösung z berechnet wird.

Die Zahl n sollte aus Sicherheitsgründen möglichst groß sein. Ein bezüglich der derzeitigen Voraussetzungen günstiger Kompromiß zwischen Sicherheit und Rechenaufwand liegt bei $\log_2 n \approx 500$.

Eine einfache und schnelle Prüfung der mit dem erfindungsgemäßen Verfahren vorgenommenen Signatur ist dadurch möglich, daß geprüft wird, ob die Zahl P(z) mod n gleich 0 ist. Bei mehreren Nullstellen je weiterem Polynom kann die Prüfung der Signatur dadurch erfolgen, daß geprüft wird, ob jede der Zahlen P(z) mod n gleich 0 ist.

Ein vorteilhaftes Endgerät für ein Telekommunikationsnetz besteht darin, daß das Endgerät einen Rechner mit einem Programm umfaßt, mit dem

- zum Signieren ein geheimer Schlüssel angewendet wird, wobei eine Prüfung der Signatur mit Hilfe eines öffentlichen Schlüssels möglich ist, wobei der öffentliche Schlüssel eine Zahl n ist, die das Produkt zweier großer Primzahlen p und q ist, und wobei der geheime Schlüssel aus mindestens einer der beiden Primzahlen besteht,
- ein Polynom P(x) unter Berücksichtigung der Nachricht und einer Zufallszahl gebildet wird,
- aus dem Polynom weitere Polynome P(x) mod p und P(x) mod q abgeleitet werden, deren Nullstellen im jeweiligen endlichen Körper GF(p) bzw. GF(q) bestimmt werden,
- die Nullstellen zu einer oder mehreren Lösungen z der Gleichung [P(x) mod n] = 0 zusammengesetzt werden,
- die Zufallszahl und die Lösung z als Signatur der Nachricht hinzugefügt werden, wobei das Polynom die Form $P(x) = x^k + a_{k-1}x^{k-1} + ... + a_1 x + a_0$ aufweist mit $k \geq 2$, und wobei die Koeffizienten $a_{k-1}...a_0$ aus der Nachricht unter Berücksichtigung der Zufallszahl gebildet werden,
- zum Prüfen der Signatur der Nachricht geprüft wird, ob die Zahl P(z) mod n gleich 0 ist.

Bei einer Weiterbildung des erfindungsgemäßen Endgerätes wird die Bedienung beim Empfangen einer signierten Nachricht dadurch erleichtert, daß eine Liste der zu vorgegebenen Absendern von Nachrichten gehörenden öffentlichen Schlüssel speicherbar ist.

Eine andere Weiterbildung des erfindungsgemäßen Endgerätes ermöglicht das Signieren einer abzusendenden Nachricht in einfacher Weise dadurch, daß ein oder mehrere geheime Schlüssel speicherbar und durch Eingabe eines Paßwortes abrufbar und auf eine zu sendende Nachricht anwendbar sind.

Das erfindungsgemäße Verfahren kann in vielfältiger Weise angewendet werden, z. B. auf Gesetzes- und Vertragstexte oder beliebige Mitteilungen im geschäftlichen und amtlichen Verkehr, die rechtliche Bindungen zur Folge haben und daher auch im konventionellen Schriftverkehr handschriftlich zu unterschreiben sind. Solche Text-Dokumente können dabei als Binärzahl mit dem Wert m aufgefaßt werden. Die als öffentlicher Schlüssel verwendete ganze Zahl n ist das Produkt zweier großer Primzahlen p und q. Mindestens eine davon ist nur dem Absender bekannt.

Bei einem bevorzugten Ausführungsbeispiel der Erfindung wird, um eine Nachricht m zu signieren, diese in Blöcke $a_{k-1},...,a_1$ soweit zerlegt, daß die Blöcke als Zahlen interpretiert kleiner als n sind. Ferner wird zum Signieren der Nachricht m eine Zufallszahl $a_0$ gewählt und das Polynom $P(x) = x^k + a_{k-1}x^{k-1} + ... + a_1 x + a_0$ gebildet. Daraus werden die Polynome P(x) mod p und P(x) mod q gebildet und auf Nullstellen in den endlichen Körpern GF(p) bzw. GF(q) untersucht. Dieses kann beispielsweise mit Hilfe des probabilistischen Algorithmus erfolgen, der von Ben-Or: "Probabilistic algorithms in finite fields", Proc. IEEE FOCS 1981, Seiten 394-398 beschrieben wurde. Man erhält jeweils mit einer Wahrscheinlichkeit von größer als ½ mindestens eine Lösung, die man mit Hilfe des chinesischen Restsatzes mit einer Wahrscheinlichkeit größer als ¼ zu mindestens einer Lösung z der Gleichung [P(x) mod n] = 0 zusammensetzen kann. Die Signatur der Nachricht m besteht dann aus der Zufallszahl $a_0$ und der Zahl z mit der Eigenschaft P(z) mod n = 0 .

Zur Überprüfung der Signatur wird das Polynom P(x) in gleicher Weise wie beim Signieren gebildet, wobei jedoch die Zufallszahl $a_0$ der Signatur entnommen wird. Mit der Zahl z aus der Signatur wird dann geprüft, ob die Gleichung P(z) mod n = 0 erfüllt ist. Die Sicherheit des erfindungsgemäßen Verfahrens ist vergleichbar mit der des RSA-Verfahrens. Besitzt jedes der beiden weiteren Polynome mindestens zwei verschiedene Nullstellen, so kann das Verfahren so modifiziert werden, daß seine Sicherheit äquivalent zur Schwierigkeit, die Zahl n zu faktorisieren, ist. Könnte ein Angreifer eine Lösung der Gleichung P(x) mod n = 0 finden, so könnte er mit einer probabilistischen Methode auch die Zahl n faktorisieren.

Im folgenden wird das erfindungsgemäße Verfahren anhand eines Zahlenbeispiels erläutert, wobei die Zahlen der Übersichtlichkeit halber sehr klein gewählt wurden. Die beiden Primzahlen werden angenommen zu: p = 1237 und q = 5683, so daß der öffentliche Schlüssel n = 7029871 ist.

Um die Nachricht m = 12345673891012 zu signieren, wird die Nachricht in zwei Blöcke $a_2 = 1234567$ und $a_1 = 3891012$ aufgeteilt. Die Bildung der Zufallszahl ergibt $a_0 = 2473865$, so daß das Polynom

$$P(x) = x^3 + 1234567x^2 + 3891012x + 2473865$$

gebildet werden kann. Daraus werden folgende beide Polynome abgeleitet:

$$P(x) \bmod p = x^3 + 41x^2 + 647x + 1102$$

und

$$P(x) \bmod q = x^3 + 1356x^2 + 3840x + 1760.$$

Jedes dieser Polynome hat genau eine Lösung:

$$z_p = 1057 \text{ in } GF(p) \text{ und } z_q = 1121 \text{ in } GF(q).$$

Aus dem erweiterten Euklidischen Algorithmus ergibt sich dann die Darstellung:

$$-2683 \cdot p + 584 \cdot q = 1.$$

Mit Hilfe dieser Darstellung kann man eine Nullstelle z der Gleichung P(x) mod n = 0 konstruieren, indem man die Zahl

$$-2683 \cdot p \cdot z_q + 584 \cdot q \cdot z_p \bmod n = 5519314$$

mit Hilfe des chinesischen Restsatzes berechnet. Die signierte Nachricht sieht dann wie folgt aus: (12345673891012, 2473865, 5519314).

Die Überprüfung der Signatur bei einem Empfänger erfolgt nach Rekonstruktion des Polynoms P(x) mit Hilfe der ersten beiden Komponenten der signierten Nachricht. Für x = 5519314 und n = 7029871 wird dieses Polynom dann wie folgt berechnet und mit 0 verglichen:

$$P(5519314) \bmod n$$

$$= (5056074 + 4128968 + 2400835 + 2473865) \bmod n = 0.$$

**Patentansprüche**

1. Verfahren zum Signieren einer Nachricht,

   - wobei zum Signieren ein geheimer Schlüssel angewendet wird und eine Prüfung der Signatur mit Hilfe eines öffentlichen Schlüssels möglich ist,
   - wobei der öffentliche Schlüssel eine Zahl n ist, die das Produkt zweier großer Primzahlen p und q ist,
   - wobei der geheime Schlüssel aus mindestens einer der beiden Primzahlen besteht,
   - wobei ein Polynom P(x) unter Berücksichtigung der Nachricht und einer Zufallszahl gebildet wird,
   - wobei aus dem Polynom weitere Polynome P(x) mod p und P(x) mod q abgeleitet werden, deren Nullstellen im jeweiligen endlichen Körper GF(p) bzw. GF(q) bestimmt werden,
   - wobei die Nullstellen zu einer oder mehreren Lösungen z der Gleichung [P(x) mod n] = 0 zusammengesetzt werden und wobei die Zufallszahl und mindestens eine Lösung z als Signatur der Nachricht hinzugefügt werden,

   dadurch gekennzeichnet,

   - daß das Polynom die Form $P(x) = x^k + a_{k-1}x^{k-1} + ... + a_1 x + a_0$ aufweist mit $k \geq 2$ und
   - daß die Koeffizienten $a_{k-1} ... a_0$ aus der Nachricht unter Berücksichtigung der Zufallszahl gebildet werden.

2. Verfahren nach Anspruch 1, dadurch gekennzeichnet, daß mehrere ausgewählte Lösungen z der Nachricht hinzugefügt werden.

3. Verfahren nach einem der Ansprüche 1 oder 2, dadurch gekennzeichnet, daß die Bildung des Polynoms, die Ableitung der weiteren Polynome und die Bestimmung der Nullstellen der weiteren Polynome erforderlichenfalls mit einer anderen Zufallszahl wiederholt werden, bis beide weiteren Polynome mindestens eine Nullstelle im jeweiligen endlichen Körper besitzen.

4. Verfahren nach einem der Ansprüche 1 oder 2, dadurch gekennzeichnet, daß die Bildung des Polynoms, die Ableitung der weiteren Polynome und die Bestimmung der Nullstellen der weiteren Polynome erforderlichenfalls mit einer anderen Zufallszahl wiederholt werden, bis beide weiteren Polynome mindestens eine vorgegebene Anzahl von Nullstellen im jeweiligen endlichen Körper besitzen.

5. Verfahren nach einem der Ansprüche 1 bis 4, dadurch gekennzeichnet, daß der Koeffizient $a_0$ von der Zufallszahl gebildet wird und daß die weiteren Koeffizienten des Polynoms durch einen vorgegebenen Algorithmus aus der Nachricht abgeleitet werden.

6. Verfahren nach Anspruch 5, dadurch gekennzeichnet, daß der vorgegebene Algorithmus eine Einteilung der Nachricht in Blöcke und die Zuordnung der Blöcke zu den einzelnen Koeffizienten beinhaltet.

7. Verfahren nach einem der vorhergehenden Ansprüche, dadurch gekennzeichnet, daß aus den Nullstellen der weiteren Polynome durch Anwendung des erweiterten Euklidischen Algorithmus und des chinesischen Restsatzes die Lösung z berechnet wird.

8. Verfahren nach einem der vorhergehenden Ansprüche, dadurch gekennzeichnet, daß $\log_2 n \approx 500$ ist.

9. Verfahren zur Prüfung der Signatur einer Nachricht, die unter Anwendung eines geheimen Schlüssels signiert wurde, mit Hilfe eines öffentlichen Schlüssels, wobei der öffentliche Schlüssel eine Zahl n ist, die das Produkt zweier großer Primzahlen p und q ist, wobei der geheime Schlüssel aus mindestens einer der beiden Primzahlen besteht, wobei ein Polynom P(x) unter Berücksichtigung der Nachricht und einer Zufallszahl gebildet wird, wobei aus dem Polynom weitere Polynome P(x) mod p und P(x) mod q abgeleitet werden, deren Nullstellen im jeweiligen endlichen Körper GF(p) bzw. GF(q) bestimmt werden, wobei die Nullstellen zu einer oder mehreren Lösungen z der Gleichung [P(x) mod n] = 0 zusammengesetzt werden und wobei die Zufallszahl und die Lösung z als Signatur der Nachricht hinzugefügt werden, wobei das Polynom die Form $P(x) = x^k + a_{k-1}x^{k-1} + \ldots + a_1 x + a_0$ aufweist mit $k \geq 2$ und wobei die Koeffizienten $a_{k-1} \ldots a_0$ aus der Nachricht unter Berücksichtigung der Zufallszahl gebildet werden, dadurch gekennzeichnet, daß geprüft wird, ob die Zahl P(z) mod n gleich 0 ist.

10. Verfahren zur Prüfung der Signatur einer Nachricht, die unter Anwendung eines geheimen Schlüssels signiert wurde, mit Hilfe eines öffentlichen Schlüssels, wobei der öffentliche Schlüssel eine Zahl n ist, die das Produkt zweier großer Primzahlen p und q ist, wobei der geheime Schlüssel aus mindestens einer der beiden Primzahlen besteht, wobei ein Polynom P(x) unter Berücksichtigung der Nachricht und einer Zufallszahl gebildet wird, wobei aus dem Polynom weitere Polynome P(x) mod p und P(x) mod q abgeleitet werden, deren Nullstellen im jeweiligen endlichen Körper GF(p) bzw. GF(q) bestimmt werden, wobei die Nullstellen zu einer oder mehreren Lösungen z der Gleichung [P(x) mod n] = 0 zusammengesetzt werden und wobei die Zufallszahl und die Lösung z als Signatur der Nachricht hinzugefügt werden, wobei das Polynom die Form $P(x) = x^k + a_{k-1}x^{k-1} + \ldots + a_1 x + a_0$ aufweist mit $k \geq 2$, wobei die Koeffizienten $a_{k-1} \ldots a_0$ aus der Nachricht unter Berücksichtigung der Zufallszahl gebildet werden, und wobei ferner die Bildung des Polynoms, die Ableitung der weiteren Polynome und die Bestimmung der Nullstellen der weiteren Polynome erforderlichenfalls mit einer anderen Zufallszahl wiederholt werden, bis beide weiteren Polynome mindestens eine vorgegebene Anzahl von Nullstellen im jeweiligen endlichen Körper besitzen, dadurch gekennzeichnet, daß geprüft wird, ob jede der Zahlen P(z) mod n gleich 0 ist.

11. Endgerät für ein Telekommunikationsnetz, dadurch gekennzeichnet, daß das Endgerät einen Rechner mit einem Programm umfaßt, mit dem

- zum Signieren ein geheimer Schlüssel angewendet wird, wobei eine Prüfung der Signatur mit Hilfe eines öffentlichen Schlüssels möglich ist, wobei der öffentliche Schlüssel eine Zahl n ist, die das Produkt zweier großer Primzahlen p und q ist, und wobei der geheime Schlüssel aus mindestens einer der beiden Primzahlen besteht,
- ein Polynom P(x) unter Berücksichtigung der Nachricht und einer Zufallszahl gebildet wird,
- aus dem Polynom weitere Polynome P(x) mod p und P(x) mod q abgeleitet werden, deren Nullstellen im jeweiligen endlichen Körper GF(p) bzw. GF(q) bestimmt werden,
- die Nullstellen zu einer oder mehreren Lösungen z der Gleichung [P(x) mod n] = 0 zusammengesetzt werden,
- die Zufallszahl und die Lösung z als Signatur der Nachricht hinzugefügt werden, wobei das Polynom die Form

$P(x) = x^k + a_{k-1}x^{k-1} + ... + a_1x + a_0$ aufweist mit $k \geq 2$, und wobei die Koeffizienten $a_{k-1}...a_0$ aus der Nachricht unter Berücksichtigung der Zufallszahl gebildet werden,

- zum Prüfen der Signatur der Nachricht geprüft wird, ob die Zahl $P(z)$ mod n gleich 0 ist.

12. Endgerät nach Anspruch 11, dadurch gekennzeichnet, daß eine Liste der zu vorgegebenen Absendern von Nachrichten gehörenden öffentlichen Schlüssel speicherbar ist.

13. Endgerät nach einem der Ansprüche 11 oder 12, dadurch gekennzeichnet, daß ein oder mehrere geheime Schlüssel speicherbar und durch Eingabe eines Paßwortes abrufbar und auf eine zu sendende Nachricht anwendbar sind.

## Claims

1. Method for signing a message,

    - wherein a secret code is used for signing and it is possible to check the signature with the aid of a public key,
    - wherein the public key is a number n, which is the product of two large primary numbers p and q,
    - wherein the secret code consists of at least one of the two primary numbers,
    - wherein a polynomial expression P(x) is generated by taking into account the message and a random number,
    - wherein further polynomial expressions P(x) mod p and P(x) mod q, whose zeros are determined in the respective finite elements GF(p) or GF(q), respectively, are derived from the polynomial expression,
    - wherein the zeros are combined in one or more solutions z of the equation $[P(x) \bmod n] = 0$, and
    - wherein the random number and at least one solution z are added as the signature of the message,

    **characterised in that**

    - the polynomial expression has the form $P(x) = x^k + a_{k-1}x^{k-1} + ... + a_1x + a_0$, where $k \geq 2$, and
    - the coefficients $a_{k-1} ... a_0$ are generated from the message by taking into account the random number.

2. Method according to Claim 1, **characterised in that** several selected solutions z are added to the message.

3. Method according to one of Claims 1 or 2, **characterised in that** the generation of the polynomial expression, the derivation of the further polynomial expressions and the determination of the zeros of the further polynomial expressions, are repeated if necessary with another random number until both additional polynomial expressions have at least one zero in the respective finite element.

4. Method according to one of Claims 1 or 2, **characterised in that** the generation of the polynomial expression, the derivation of the further polynomial expressions and the determination of the zeros of the further polynomial expressions, are repeated if necessary with another random number until both additional polynomial expressions have at least a predetermined number of zeros in the respective finite element.

5. Method according to one of Claims 1 to 4, **characterised in that** the coefficient $a_0$ is generated from the random number and that the further coefficients of the polynomial expression are derived from the message by means of a predetermined algorithm.

6. Method according to Claim 5, **characterised in that** the predetermined algorithm involves subdivision of the message into blocks and the allocation of the blocks to the individual coefficients.

7. Method according to one of the preceding Claims, **characterised in that** the solution z is calculated from the zeros of the further polynomial expressions by using the expanded Euclidean algorithm and the Chinese remainder theorem.

8. Method according to one of the preceding Claims, **characterised in that** $\log_2 n \approx 500$.

9. Method for validating the signature of a message which was signed by using a secret code, with the aid of a public key, wherein the public key is a number n, which is the product of two large primary numbers p and q, wherein the secret code consists of at least one of the two primary numbers, wherein a polynomial expression P(x) is generated by taking into account the message and a random number, wherein further polynomial expressions P(x) mod p and P(x) mod q whose zeros are determined in the respective finite elements GF(p) or GF(q), respectively, are derived from the polynomial expression, wherein the zeros are combined in one or more solutions z of the equation [P(x) mod n] = 0, and wherein the random number and the solution z are added as the signature of the message, wherein the polynomial expression has the form $P(x) = x^k + a_{k-1}x^{k-1} + ... + a_1x + a_0$, where $k \geq 2$, and wherein the coefficients $a_{k-1} ... a_0$ are generated from the message by taking the random number into account, **characterised in that** a check is made to ascertain if the number P(z) mod n is equal to 0.

10. Method for validating the signature of a message which was signed by using a secret code, with the aid of a public key, wherein the public key is a number n, which is the product of two large primary numbers p and q, wherein the secret code consists of at least one of the two primary numbers, wherein a polynomial expression P(x) is generated by taking into account the message and a random number, wherein further polynomial expressions P(x) mod p and P(x) mod q whose zeros are determined in the respective finite elements GF(p) or GF(q), respectively, are derived from the polynomial expression, wherein the zeros are combined in one or more solutions z of the equation [P(x) mod n] = 0, and wherein the random number and the solution z are added as the signature of the message, wherein the polynomial expression has the form $P(x) = x^k + a_{k-1}x^{k-1} + ... + a_1x + a_0$, where $k \geq 2$, wherein the coefficients $a_{k-1} ... a_0$ are generated from the message by taking the random number into account, and wherein, furthermore, the generation of the polynomial expression, the derivation of the further polynomial expressions and the determination of the zeros of the further polynomial expressions, are repeated if necessary with another random number until both additional polynomial expressions have at least a predetermined number of zeros in the respective finite element, **characterised in that** a check is made to ascertain if any of the numbers P(z) mod n is equal to 0.

11. Terminal for a telecommunications network, **characterised in that** the terminal includes a computer with a program with which

   - a secret code is used for signing and it is possible to validate the signature with the aid of a public key, wherein the public key is a number n, which is the product of two large primary numbers p and q, and wherein the secret code consists of at least one of the two primary numbers,
   - a polynomial expression P(x) is generated by taking into account the message and a random number,
   - further polynomial expressions P(x) mod p and P(x) mod q whose zeros are determined in the respective finite elements GF(p) or GF(q), respectively, are derived from the polynomial expression,
   - the zeros are combined in one or more solutions z of the equation [P(x) mod n] = 0,
   - the random number and the solution z are added as the signature of the message, wherein the polynomial expression has the form $P(x) = x^k + a_{k-1}x^{k-1} + ... + a_1x + a_0$, where $k \geq 2$, and wherein the coefficients $a_{k-1} ... a_0$ are generated from the message by taking the random number into account,
   - for validation of the signature of the message a check is made to ascertain if the number P(z) mod n is equal to 0.

12. Terminal according to Claim 11, **characterised in that** a list of the public keys associated with the predetermined senders of messages is able to be stored.

13. Terminal according to one of Claims 11 or 12, **characterised in that** one or more secret codes are able to be stored and can be called up by inputting a password and can be used on a message to be transmitted.

## Revendications

1. Procédé pour signer un message, dans lequel

   - on utilise une clé secrète pour signer, et une vérification de la signature à l'aide d'une clé publique est possible,
   - la clé publique est un nombre n qui est le produit de deux grands nombres premiers p et q,
   - la clé secrète est constituée d'au moins l'un des deux nombres premiers,
   - on forme un polynôme P(x) en tenant compte du message et d'un nombre aléatoire,
   - on déduit du polynôme d'autres polynômes P(x) mod p et P(x) mod q dont les racines sont déterminées dans le domaine fini respectif GF(p) ou GF(q),
   - on regroupe les racines en une ou plusieurs solutions z de l'équation [P(x) mod n] = 0 et on adjoint le nombre aléatoire et au moins une solution z comme signature au message,

   caractérisé par le fait que

- le polynôme a la forme $P(x) = x^k + a_{k-1}x^{k-1} + ... + a_1x + a_0$ avec $k \geq 2$ et
- on forme les coefficients $a_{k-1}$ à $a_0$ à partir du message en tenant compte du nombre aléatoire.

2. Procédé selon la revendication 1, caractérisé par le fait que l'on adjoint au message plusieurs solutions z choisies.

3. Procédé selon l'une des revendications 1 ou 2, caractérisé par le fait que la formation du polynôme, la déduction des autres polynômes et la détermination des racines des autres polynômes sont répétées si nécessaire avec un autre nombre aléatoire jusqu'à ce que les deux autres polynômes aient au moins une racine dans le domaine fini respectif.

4. Procédé selon l'une des revendications 1 ou 2, caractérisé par le fait que la formation du polynôme, la déduction des autres polynômes et la détermination des racines des autres polynômes sont répétées si nécessaire avec un autre nombre aléatoire jusqu'à ce que les deux autres polynômes aient au moins un nombre prédéterminé de racines dans le domaine fini respectif.

5. Procédé selon l'une des revendications 1 à 4, caractérisé par le fait que le coefficient $a_0$ est formé par le nombre aléatoire et que l'on déduit du message les autres coefficients du polynôme au moyen d'un algorithme prédéterminé.

6. Procédé selon la revendication 5, caractérisé par le fait que l'algorithme prédéterminé contient une division du message en blocs et une association des blocs aux coefficients individuels.

7. Procédé selon l'une des revendications précédentes, caractérisé par le fait que l'on calcule la solution z à partir des racines des autres polynômes en utilisant l'algorithme euclidien étendu et le résidu chinois.

8. Procédé selon l'une des revendications précédentes, caractérisé par le fait que log2n V 500.

9. Procédé pour vérifier à l'aide d'une clé publique la signature d'un message qui a été signé en utilisant une clé secrète, dans lequel la clé publique est un nombre n qui est le produit de deux grands nombres premiers p et q, la clé secrète est constituée d'au moins l'un des deux nombres premiers, on forme un polynôme $P(x)$ en tenant compte du message et d'un nombre aléatoire, on déduit du polynôme d'autres polynômes $P(x) \bmod p$ et $P(x) \bmod q$ dont les racines sont déterminées dans le domaine fini respectif GF(p) ou GF(q), on regroupe les racines en une ou plusieurs solutions z de l'équation $[P(x) \bmod n] = 0$ et on adjoint le nombre aléatoire et la solution z comme signature au message, le polynôme a la forme $P(x) = xk + a_{k-1}x^{k-1} + ... + a_1x + a_0$ avec $k \geq 2$ et on forme les coefficients $a_{k-1}$ à $a_0$ à partir du message en tenant compte du nombre aléatoire, caractérisé par le fait qu'on vérifie si le nombre $P(z) \bmod n$ est égal à 0.

10. Procédé pour vérifier à l'aide d'une clé publique la signature d'un message qui a été signé en utilisant une clé secrète, dans lequel la clé publique est un nombre n qui est le produit de deux grands nombres premiers p et q, la clé secrète est constituée d'au moins l'un des deux nombres premiers, on forme un polynôme $P(x)$ en tenant compte du message et d'un nombre aléatoire, on déduit du polynôme d'autres polynômes $P(x) \bmod p$ et $P(x) \bmod q$ dont les racines sont déterminées dans le domaine fini respectif GF(p) ou GF(q), on regroupe les racines en une ou plusieurs solutions z de l'équation $[P(x) \bmod n] = 0$ et on adjoint le nombre aléatoire et la solution z comme signature au message, le polynôme a la forme $P(x) = x^k + a_{k-1}x^{k-1} + ... + a_1x + a_0$ avec $k \geq 2$, on forme les coefficients $a_{k-1}$ à $a_0$ à partir du message en tenant compte du nombre aléatoire, et on répète si nécessaire avec un autre nombre aléatoire la formation du polynôme, la déduction des autres polynômes et la détermination des racines des autres polynômes jusqu'à ce que les deux autres polynômes aient au moins un nombre prédéterminé de racines dans le domaine fini respectif caractérisé par le fait qu'on vérifie si chacun des nombres $P(z) \bmod n$ est égal à 0.

11. Dispositif pour un réseau de télécommunication, caractérisé par le fait que le dispositif comprend un ordinateur ayant un programme avec lequel

- pour signer, on utilise une clé secrète, une vérification de la signature à l'aide d'une clé publique étant possible, la clé publique étant un nombre n qui est le produit de deux grands nombres premiers p et q et la clé secrète étant constituée d'au moins l'un des deux nombres premiers,
- on forme un polynôme $P(x)$ en tenant compte du message et d'un nombre aléatoire,
- on déduit du polynôme d'autres polynômes $P(x) \bmod p$ et $P(x) \bmod q$ dont les racines sont déterminées dans le domaine fini respectif GF(p) ou GF(q),
- on regroupe les racines en une ou plusieurs solutions z de l'équation [P(x) mod n] = 0,
- on adjoint le nombre aléatoire et la solution z comme signature au message, le polynôme ayant la forme P(x) = $x^k + a_{k-1}x^{k-1} + ... + a_1x + a_0$ avec k ≥ 2 et les coefficients $a_{k-1}$ à $a_0$ étant formés à partir du message en tenant compte du nombre aléatoire,
- pour vérifier la signature du message, on vérifie si le nombre P(z) mod n est égal à 0.

**12.** Dispositif selon la revendication 11, caractérisé par le fait qu'une liste des clés publiques appartenant à des expéditeurs prédéterminés de messages peut être mémorisée.

**13.** Dispositif selon l'une des revendications 11 ou 12, caractérisé par le fait qu'une ou plusieurs clés secrètes peuvent être mémorisées, qu'elles peuvent être appelées par l'entrée d'un mot de passe et qu'elles peuvent être appliquées à un message à émettre.